# EUROPÄISCHE PATENTSCHRIFT

(11) **EP 0 923 586 B1**
(45) Veröffentlichungstag und Bekanntmachung des Hinweises auf die Patenterteilung: **05.03.2003**
(21) Anmeldenummer: 97932791.3
(22) Anmeldetag: 09.07.1997
(51) Int. Cl.: C07F 9/30, C08K 5/5313

(54) **Aluminiumsalze von Phosphinsäuren**
Phosphinic acid aluminium salts
Sels d'aluminium d'acides phosphiniques

(30) Priorität: 22.07.1996 DE 19629432
(43) Veröffentlichungstag der Anmeldung: 23.06.1999
(73) Patentinhaber: Ticona GmbH, 65451 Kelsterbach (DE)
(72) Erfinder: KLEINER, Hanss-Jerg, D-61476 Kronberg (DE)
(86) Internationale Anmeldenummer: EP9703631
(87) Internationale Veröffentlichungsnummer: WO98003515

(56) Entgegenhaltungen:
- EP-A- 0 699 708
- DE-A- 2 745 982
- DE-C- 19 616 025
- MIKULSKI C M ET AL: "Methylphenylphosphinate complexes with tri- and tetra-positive metal ions" TRANSITION MET. CHEM. (WEINHEIM, GER.) (TMCHDN,03404285);81; VOL.6 (2); PP.79-82, BEAVER COLL.;DEP. CHEM. PHYS.; GLENSIDE; 19038; PA; USA, XP000675826

## Beschreibung

Die Erfindung betrifft Aluminiumsalze von Phosphinsäuren, Verfahren zu deren Herstellung und deren Verwendung als Flammschutzmittel.

Aluminiumsalze von Phosphinsäuren stellen wertvolle Flammschutzmittel für Formmassen aus Polyester und Polyamid dar. Ihre Herstellung erfolgt aus den Phosphinsäuren in wäßriger Lösung mit Metallcarbonaten, Metallhydroxiden oder Metalloxiden (EP-A2-0699708).

Bisher werden Phosphinsäureester bei Verseifung bei 180°C unter Druck mit überschüssigem Wasser nur dann in die entsprechenden Phosphinsäuren in guten Ausbeuten umgewandelt, wenn aus der Gasphase des Autoklaven der gebildete Alkohol im Gemisch mit Wasser entfernt wird (Houben-Weyl, Methoden der organischen Chemie 1982, Band E2, Seite 142; DE-A1-27 45 982).

Es wurde gefunden, daß die Aluminiumsalze von Phosphinsäuren unter Druck aus den entsprechenden Estern mit Wasser und Aluminiumhydroxyd in guten Ausbeuten hergestellt werden können. Weiterhin wurde gefunden, daß die Aluminiumsalze von Phosphinsäuren oder Diphosphinsäuren mit Alkyl- und/oder Aryl-Substituenten bei einer Temperatur über 150° C unter Druck in einer neuen Kristallform gebildet werden. Diese Aluminiumsalze werden als Hochtemperaturmodifikation bezeichnet. Die bei Temperaturen von 80 bis 100° C hergestellten, bisher bekannten Aluminiumsalze werden als Niedertemperaturmodifikation bezeichnet.

Gegenstand der Erfindung sind somit Aluminiumsalze von Phosphinsäuren oder Diphosphinsäuren mit Alkyl- und/oder Aryl-Substituenten, dadurch gekennzeichnet, dass das Aluminiumsalz in Form von Kristallen mit einem Verhältnis von Breite zu Länge von weniger als 0,2 vorliegt.

Alkyl-Substituenten sind vorzugsweise C₁-C₈-Alkyl, insbesondere C₁-C₄-Alkyl, linear oder verzweigt, zum Beispiel Methyl, Ethyl, n-Propyl, iso-Propyl, iso-Butyl, n-Butyl, n-Hexyl oder n-Octyl. Bevorzugter Aryl-Substituent ist die PhenylGruppe.

Die Aluminiumsalze der Hochtemperaturmodifikation können auch Polymere der Phosphinsäuren oder Diphosphinsäuren sein. Die Begriffe "Phosphinsäure" und "Diphosphinsäure" beinhalten demgemäß Monomere, Oligomere und Polymere.

Ein weiterer Gegenstand der Erfindung ist ein Verfahren zur Herstellung von Aluminiumsalzen von Phosphinsäuren oder Diphosphinsäuren, wobei Ester der entsprechenden Phosphinsäuren oder Diphosphinsäuren mit Aluminiumhydroxid unter Druck bei 150 bis 350°C in Gegenwart von Wasser umgesetzt werden.

Ein weiterer Gegenstand der Erfindung ist ein Verfahren zur Herstellung von Aluminiumsalzen von Phosphinsäuren oder Diphosphinsäuren der Hochtemperaturmodifikation, wobei die entsprechenden Aluminiumsalze in der Niedertemperaturmodifikation einer Temperatur im Bereich von 150 bis 350°C in Gegenwart von Wasser ausgesetzt werden.

Geeignete Aluminiumsalze von Phosphinsäuren oder Diphosphinsäuren sind beispielsweise Verbindungen gemäß der Formeln l oder ll 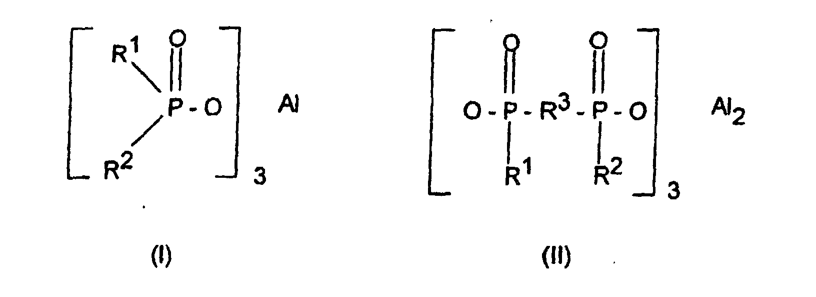 worin
- R¹, R²: C₁-C₈-Alkyl, vorzugsweise C₁-C₄-Alkyl, linear oder verzweigt, z.B. Methyl, Ethyl, n-Propyl, iso-Butyl, n-Butyl, n-Hexyl, Phenyl
- R³: C₁-C₁₀-Alkylen, linear oder verzweigt, z.B. Methylen, Ethylen, n-Propylen, iso-Propylen, n-Butylen, n-Decyclen,
Arylen, z.B. Phenylen, Naphthylen;
Alkylarylen, z.B. Methylphenylen, Ethylphenylen, Methylphenylenmethyl Arylalkylen, z.B. Phenyl-methylen, Phenylethylen
bedeuten. Die Aluminiumsalze gemäß der Formeln I oder II sind beispielsweise aus Phosphinsäureestern oder Diphosphinsäurediestern der Formeln III oder IV 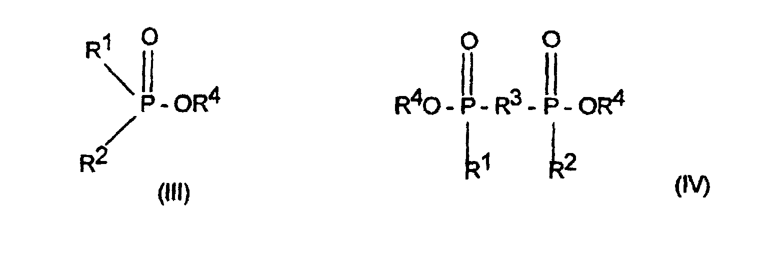 worin R¹, R² und R³ die oben angegebene Bedeutung haben und R⁴ = C₁-C₈-Alkyl, vorzugsweise C₄-C₆-Alkyl ist, herstellbar. Vorteilhaft werden die Verbindungen gemäß der Formeln III oder IV mit Wasser und Aluminiumhydroxid unter Druck bei 150 bis 350°C umgesetzt und in diesem Temperaturbereich für mehrere Stunden erhitzt, wobei die entsprechenden Aluminiumsalze als Hochtemperaturmodifikation anfallen.

Als Ausgangsstoffe für die Herstellung der Aluminiumsalze kommen insbesondere in Frage: Dimethylphosphinsäure-methylester, Ethylmethylphosphinsäure-ethylester, Ethylmethylphosphinsäure-isobutylester, Methylpropylphosphinsäure-n-butylester. Isobutyl-methylphosphinsäureamylester, Hexyl-methylphosphinsäureisopropylester, Methyl-oktylphosphinsäure-nbutylester, Methyl-phenylphosphinsäure-n-butylester, Diphenylphosphinsäure-npentylester, Hexan-1,6-di-(methylphosphinsäure-n-butylester), Benzol-1,4-(dimethylphosphinsäure-isobutylester).

Das Verfahren zur Herstellung der Hochtemperaturmodifikation wird in einer Variante so durchgeführt, daß Phosphinsäureester mit überschüssigem Wasser und stöchiometrischen Mengen Aluminiumhydroxid unter Druck auf 150 bis 350°C, vorzugsweise 180 bis 250°C, zweckmäßig unter ständigem Rühren, erhitzt werden. Die erforderlichen Reaktionszeiten betragen im allgemeinen mindesens 4 und vorzugsweise mindestens 40 Stunden, insbesondere 50 bis 70 Stunden. Die Reaktionszeiten sind abhängig von der Kettenlänge der Estergruppe (zum Beispiel R⁴ in den Formeln III und IV). Die Methylester verseifen beispielsweise schneller als die Butylester. Nach beendeter Umsetzung werden die entstandenen Kristalle abgetrennt und getrocknet. Die Reaktionsbedingungen wie Temperatur und Reaktionszeit können auch so variiert werden, daß Mischungen von Nieder- und Hochtemperaturmodifikation erhalten werden.

Aluminiumsalze der Hochtemperaturmodifikation wandeln sich bei Raumtemperatur allmählich in die Niedertemperaturmodifikation um, wobei jedoch die Kristalltracht der Hochtemperaturmodifikation erhalten bleibt.

Die Hochtemperaturmodifikation besteht aus nadelförmigen Kristallen, die faserartig aussehen. Die Kristalle weisen im allgemeinen eine Breite im Bereich von etwa 0,2 bis 1,5 µm, insbesondere 0,2 bis 1 µm, auf. Das Verhältnis von Breite zu Länge der Kristalle hat einen Wert von unter 0,2. Das Verhältnis Breite zu Länge der Kristalle liegt gewöhnlich bei etwa 0,1 oder darunter. Die Kristalle bilden gewöhnlich Agglomerate, die wie filzartige Ballen aussehen. Die Agglomerate fallen mit einem Durchmesser in einem Größen-bereich von etwa 10 bis 170 µm an, wobei der Hauptanteil aus Agglomeraten mit einem Durchmesser von etwa 20 µm besteht.

Die Niedertemperaturmodifikation besteht aus zylinderförmigen Kristallen, die in der Regel eine Breite von mehr als 1,5 µm, typischerweise 2 bis 5 µm, ausweisen. Das Verhältnis von Breite zu Länge der Kristalle liegt gewöhnlich im Bereich von 0,6 bis 2, typischerweise bei 2. Die Kristalle bilden auch Agglomerate, die einen Durchmesser größtenteils um 20 µm haben.

Die Hochtemperaturmodifikation der Aluminiumsalze eignet sich in besonderer Weise als Flammschutzmittel oder Flammhemm-Mittel für Kunststoffe, insbesondere für Polyester oder Polyamid.

Die Aluminiumsalze der Hochtemperaturmodifikation haben Vorteile für die Verwendung als Flammschutzmittel für Kunststoffe. Untersuchungen haben gezeigt, daß die flammhemmende Wirkung der Salze der Phosphinsäuren im Kunststoff von der Korngröße des Salzes abhängt und es eine optimale Korngröße gibt. Die Aluminiumsalze der Hochtemperaturmodifikation entstehen bereits in der günstigen Korngröße. Ein Mahlen der Aluminiumsalze ist daher für eine Compoundierung nicht erforderlich, was für die Herstellung flammgeschützter Kunststoffe einen wirtschaftlichen Vorteil bedeutet. Außerdem erlaubt die feinere Struktur des Aluminiumsalzes eine homogenere Verteilung des Flammschutzmittels im Kunststoff. Die faserige Struktur des Aluminiumsalzes führt darüberhinaus zu einer Verstärkung des Kunststoffes (Faserverstärkung). Die feinere Struktur führt zu einer größeren Oberfläche des Kornes und verbessert beispielsweise bei der Verwendung von Synergisten wie Stickstoffverbindungen deren Wirkung für den Flammschutz.

### Beispiel 1

308 g (1,75 Mol) Methyl-n-propylphosphinsäure-n-butylester, 290 ml Wasser und 45,5 g (0,583 Mol) Aluminiumhydroxid werden in einen 1-l-Autoklaven gefüllt und 50 Stunden unter Rühren auf 200°C gehalten. Dann wird gekühlt und abgesaugt, anschließend getrocknet. Man erhält 214 g Aluminiumsalz der Methyl-n-propylphosphinsäure. Das entspricht einer Ausbeute von 94 % d.Th.. Das Produkt schmilzt bis 360°C nicht. Das Produkt behält die Kristalltracht einer Hochtemperaturmodifikation bei (Pseudomorphie).

Wird das Produkt entsprechend der EP-A2-0699708 hergestellt, so fällt es in der Niedertemperaturmodifikation an (siehe dazu auch die anliegenden Tabellen der Maxima der Röntgen-Beugungsdiagramme, Cu-Kα₁).

### Beispiel 2

264 g (1,5 Mol) Ethyl-methylphosphinsäure-n-butylester, 250 ml Wasser und 39 g (0,5 Mol) Aluminiumhydroxid werden in einem 1-l-Autoklav 50 Stunden unter Rühren bei 200°C gehalten. Dann wird gekühlt und abgesaugt, anschließend bei 100°C im Vakuum-Trockenschrank getrocknet. Man erhält 157 g Aluminiumsalz der Ethyl-methylphosphinsäure mit einem Restwassergehatt von 58 ppm und einer mittleren Korngröße von 20,03 µm. Das entspricht einer Ausbeute von 90 % d.Th.. Das Produkt schmilzt bis 360°C nicht. Das Produkt behält die Kristalltracht einer Hochtemperaturmodifikation bei (Pseudomorphie).

Wird das Produkt entsprechend der Patentschrift EP-A2-0699708 hergestellt, so fällt es in der Niedertemperaturmodifikation an (siehe dazu auch die anliegenden Tabellen der Maxima der Röntgen-Beugungsdiagramme, Cu-Kα₁).

### Beispiel 3

213 g (1,2 Mol) Ethyl-methylphosphinsäure-amylester, 200 ml Wasser und 31,2 g (0,4 Mol) Aluminiumhydroxid werden bei 190 bis 220°C in einem 1-I-Autoklav 50 Stunden gehalten. Dann wird abgesaugt und getrocknet. Man erhält 123 g Aluminiumsalz der Ethyl-methylphosphinsäure. Das entspricht einer Ausbeute von 88,5 % d.Th.. Das Produkt fällt in der Kristalltracht einer Hochtemperaturmodifikation an (siehe dazu Beispiel 1).

**Tabelle 1:**

| Röntgenbeugungsdiagramm von Aluminiummethylpropylphosphinat (Debye-Scherrer-Strahlengang, Cu-Kα₁, Transmission) | | | |
|---|---|---|---|
| Niedertemperaturphase | | Hochtemperaturphase | |
| 2θ[°] | rel. Int. | 2θ [°] | rel. Int. |
| 8,75 | 100 | 8,35 | 100 |
| 14,10 | 1 | | |
| 15,20 | 2 | 14,55 | 2 |
| 16,60 | 3 | | |
| 20,25 | 6 | 20,05 | 6 |
| 20,75 | 7 | | |
| 22,10 | 3 | 22,05 | < 1 |
| 22,50 | 4. | | |
| 23,90 | 3 | 23,40 | 2 |
| 26,85 | 3 | 26,30 | 2 |
| 27,30 | 2 | | |
| 28,70 | 1 | | |
| 29,65 | 2 | 28,95 | <1 |
| 30,10 | 2 | | |
| 33,50 | 1 | 32,45 | < 1 |

**Tabelle 2:**

| Röntgenbeugungsdiagramm von Aluminiumethylmethylphosphinat (Debye-Scherrer-Strahlengang, Cu-Kα₁, Transmission) | | | |
|---|---|---|---|
| Niedertemperaturphase | | Hochtemperaturphase | |
| 2 θ [°] | rel. Intensität | 2 θ [°] | rel. Intensität |
| 9,70 | 100 | 9,35 | 100 |
| 19,60 | 20 | 18,95 | 9 |
| | | 19,55 | 5 |
| 25,95 | 4 | 25,45 | 2 |
| 27,75 | 13 | 26,70 | 5 |
| | | 27,15 | 2 |
| 32,70 | 2 | 31,70 | 1 |
| 34,20 | 1 | 32,60 | < 1 |
| 35,45 | 3 | 34,20 | 1 |
| 36,95 | 1 | 35,50 | < 1 |

### Beispiel 4

250g Aluminiumsalz der Ethylmethylphosphinsäure, hergestellt bei 90° C gemäß Beispiel 1 in EP-A2-0699708 (Niedertemperaturmodifikation), werden in 250g Wasser 50 Stunden bei 200° C erhitzt. Danach läßt man auf Raumtemperatur abkühlen. Die Flüssigkeit wird abgesaugt und die Kristalle getrocknet. Man erhält 230g Aluminiumsalz der Ethylmethylphosphinsäure in die Kristalltracht der Hochtemperaturmodifikation.

### Beispiel 5 (Vergleichsbeispiel)

30g Aluminiumsalz der Ethylmethylphosphinsäure, hergestellt bei 90° C (Niedertemperaturmodifikation), werden unter Stickstoffatmosphäre 7 Stunden bei 250° C gerührt. Eine Umwandlung in die Hochtemperaturmodifikation findet praktisch nicht statt.

## Patentansprüche

1. Aluminiumsalz von Phosphinsäuren oder Diphosphinsäuren mit Alkyl- und/oder Arylsubstituenten, **dadurch gekennzeichnet, dass** das Aluminiumsalz in Form von Kristallen mit einem Verhältnis von Breite zu Länge von weniger als 0,2 vorliegt.

2. Aluminiumsalz gemäß Anspruch 1, enthaltend Methyl-, Ethyl-, Propyl-, oder Phenyl-Substituenten.

3. Aluminium-methylpropylphosphinat, **dadurch gekennzeichnet, dass** das Cu-Kα₁-Röntgenbeugungsdiagramm bei 2 θ folgende Reflexe zeigt 8,35; 14,55; 20,05; 22,05; 23,40; 26,30; 28,95 und 32,45°.

4. Aluminium-ethylmethylphosphinat, **dadurch gekennzeichnet, dass** das Cu-Kα₁-Röntgenbeugungsdiagramm bei 2 θ folgende Reflexe zeigt 9,35; 18,95; 19,55; 25,45; 26,70; 27,15; 31,70; 32,60; 34,20 und 35,50°.

5. Verfahren zur Herstellung von Aluminiumsalzen von Phosphinsäuren oder Diphosphinsäuren, wobei Ester der entsprechenden Phosphinsäuren oder Diphosphinsäuren mit Aluminiumhydroxid unter Druck bei 150 bis 350 °C in Gegenwart von Wasser umgesetzt werden.

6. Verfahren zur Herstellung von Aluminiumsalzen von Phosphinsäuren oder Diphosphinsäuren gemäß einem der Ansprüche 1 bis 4, wobei bei Temperaturen unter 100 °C hergestellte Aluminiumsalze bei Temperaturen im Bereich von 150 bis 350 °C in Gegenwart von Wasser über einen Zeitraum von mehr als 40 Stunden erhitzt werden.

7. Verwendung von Aluminiumsalz gemäß der Ansprüche 1 bis 4 als Flammschutzmittel, bevorzugt als Flammschutzmittel für Kunststoffe, insbesondere als Flammschutzmittel für Polyester oder Polyamid.

8. Verwendung von Aluminiumsalz gemäß Anspruch 7 in Kombination mit einem oder mehreren Synergisten, insbesondere einer Stickstoffverbindung als Synergisten.

## Claims

1. An aluminum salt of phosphinic acids or diphosphinic acids having alkyl and/or aryl substituents, which is present in the form of crystals having a ratio of width to length of less than 0.2.

2. An aluminum salt as claimed in claim 1, containing methyl, ethyl, propyl or phenyl substituents.

3. Aluminum methylpropylphosphonate, wherein the Cu-Kα₁ X-ray diffraction pattern has the following reflexes at 2θ: 8.35, 14.55, 20.05, 22.05, 23.40, 26.30, 28.95 and 32.45°.

4. Aluminum ethylmethylphosphonate, wherein the Cu-Kα₁ X-ray diffraction pattern has the following reflections at 2θ: 9.35, 18.95, 19.55, 25.45, 26.70, 27.15, 31.70, 32.60, 34.20 and 35.50°.

5. A process for the preparation of aluminum salts of phosphinic acids or diphosphinic acids, esters of the corresponding phosphinic acids or diphosphinic acids with aluminum hydroxide being reacted under pressure at 150 to 350°C in the presence of water.

6. The process for the preparation of aluminum salts of phosphinic acids or diphosphinic acids as claimed in any of claims 1 to 4, aluminum salts prepared at temperatures of less than 100°C being heated at temperatures in the range from 150 to 350°C in the presence of water for a period of more than 40 hours.

7. The use of an aluminum salt as claimed in any of claims 1 to 4 as a flameproofing agent, preferably as a flameproofing agent for plastics, in particular as a flameproofing agent for polyester or polyamide.

8. The use of an aluminum salt as claimed in claim 7 in combination with one or more synergistic agents, in particular with a nitrogen compound as a synergistic agent.

## Revendications

1. Sel d'aluminium d'acides phosphiniques ou d'acides diphosphiniques comportant des substituants alkyle et/ou aryle, **caractérisé en ce que** le sel d'aluminium se présente sous forme de cristaux ayant un rapport de la largeur à la longueur de moins de 0,2.

2. Sel d'aluminium selon la revendication 1, contenant des substituants méthyle, éthyle, propyle ou phényle.

3. Méthylpropylphosphinate d'aluminium **caractérisé en ce que** le diagramme de diffraction des rayons X dans la raie Kα₁ du Cu présente à 2 θ les réflexions suivantes : 8,35 ; 14,55 ; 20,05 ; 22,05 ; 23,40 ; 26,30 ; 28,95 et 32,45°.

4. Ethylméthylphosphinate d'aluminium **caractérisé en ce que** le diagramme de diffraction des rayons X dans la raie Kα₁ du Cu présente à 2 θ les réflexions suivantes : 9,35 ; 18,95 ; 19,55 ; 25,45 ; 26,70 ; 27,15 ; 31,70 ; 32,60 ; 34,20 et 35,50°.

5. Procédé pour la préparation de sels d'aluminium d'acides phosphiniques ou d'acides diphosphiniques, dans lequel on fait réagir des esters des acides phosphiniques ou diphosphiniques correspondants avec de l'hydroxyde d'aluminium sous pression, à 150-350°C, en présence d'eau.

6. Procédé pour la préparation de sels d'aluminium d'acides phosphiniques ou diphosphiniques selon l'une quelconque des revendications 1 à 4, dans lequel des sels d'aluminium préparés à des températures inférieures à 100°C sont chauffés à des températures dans la plage allant de 150 à 350°C, en présence d'eau, pendant une durée de plus de 40 heures.

7. Utilisation du sel d'aluminium selon les revendications 1 à 4, en tant qu'agent ignifuge, de préférence en tant qu'agent ignifuge pour des matières plastiques, en particulier en tant qu'agent ignifuge pour polyester ou polyamide.

8. Utilisation du sel d'aluminium selon la revendication 7, en association avec un ou plusieurs agents synergiques, en particulier avec un composé azoté en tant qu'agent synergique.
